# EUROPEAN PATENT SPECIFICATION

(11) **EP 1 557 582 B1**
(45) Date of publication and mention of the grant of the patent: **29.02.2012**
(21) Application number: 03809840.6
(22) Date of filing: 06.08.2003
(51) Int. Cl.: F16F 7/00, B60R 21/04, B60R 19/18, B29C 49/04, B29C 49/48

(54) **IMPACT ABSORBING BODY FOR VEHICLE**
STOSSDÄMPFUNGSKÖRPER FÜR FAHRZEUGE
CORPS ABSORBEUR DE CHOCS POUR VEHICULE

(30) Priority: 31.10.2002 JP 2002319160; 31.10.2002 JP 2002319161; 31.10.2002 JP 2002319162; 31.10.2002 JP 2002319163; 31.01.2003 JP 2003025254; 31.01.2003 JP 2003025255; 31.01.2003 JP 2003025256; 31.01.2003 JP 2003025257; 31.01.2003 JP 2003025258; 28.02.2003 JP 2003054856; 28.02.2003 JP 2003054857; 28.02.2003 JP 2003054858; 31.03.2003 JP 2003097349; 14.05.2003 JP 2003135249
(43) Date of publication of application: 27.07.2005
(73) Proprietor: KYORAKU CO., LTD., Kyoto-shi, Kyoto 602-0912 (JP)
(72) Inventor: TAMADA, Teruo, Yokohama-shi, Kanagawa 246-0014 (JP); INUI, Hiroo, Nagoya-shi, Aichi 451-0014 (JP)
(74) Representative: Loven, Keith James
(86) International application number: PCT/JP2003/010011
(87) International publication number: WO 2004/040161

(56) References cited:
- EP-A- 1 172 260
- WO-A1-99/22160
- JP-A- 3 200 449
- JP-A- 7 035 182
- JP-A- 10 250 513
- JP-A- 11 348 699
- JP-A- 2002 187 508
- PATENT ABSTRACTS OF JAPAN vol. 015, no. 105 (M-1092), 13 March 1991 (1991-03-13) -& JP 03 001925 A (KYORAKU CO LTD), 8 January 1991 (1991-01-08)

## Description

### TECHNICAL FIELD

The present invention relates to a member for absorbing an impact or the energy therefrom, provided inside a vehicle structural member such as a door, a door trim, a body side panel, a roof panel, a pillar, and a bumper, for absorbing the impact from the inside such as the collision of a passenger against the inner wall of the vehicle structural member or the impact from the outside such as the collision with another vehicle.

### BACKGROUND OF THE INVENTION

As this kind of an energy absorbing member for a vehicle, the official gazette of Japanese Patent No. 3,313,999 discloses an energy absorbing component with a hollow double wall structure, produced by blow molding of thermoplastics, forming recessed ribs from the front surface wall and the rear surface wall with the top end parts thereof bonded with each other so as to be integrated for improving the impact absorbing property, and the official gazette of Japanese Patent Application Laid Open (JP-A) No. 2002-187508 discloses one comprising an interlocking rib for integrally linking a plurality of recessed ribs for improving the energy absorbing property. EP 1172260, Kyoraku Co Ltd, describes an automobile bumper core comprising a surface wall and an opposing rear wall, with a pair of opposing side walls. A plurality of ribs forming a plurality of hollow portions connect the surface wall and the rear wall.

This kind of an energy absorbing member is designed to be provided inside a vehicle structural member such as a door and a body side panel. It has been found that a sufficient shock absorbing property is not obtained by merely linking a plurality of the recessed ribs integrally as shown in the official gazette of Japanese Patent Application Laid Open (JP-A) No. 2002-187508.

Moreover, according to the energy absorbing member for a vehicle as disclosed in the official gazette of Japanese Patent No. 3,313,999 produced by forming recessed ribs from the front surface wall and the rear surface wall with the top end parts thereof bonded with each other so as to be integrated, it is pointed out that although the shock absorbing property with respect to the stress by the impact is high, in the case the stress by the impact is applied continuously, the recessed ribs buckle so that the impact absorbing property is deteriorated remarkably so that the intended shock absorbing property is not obtained.

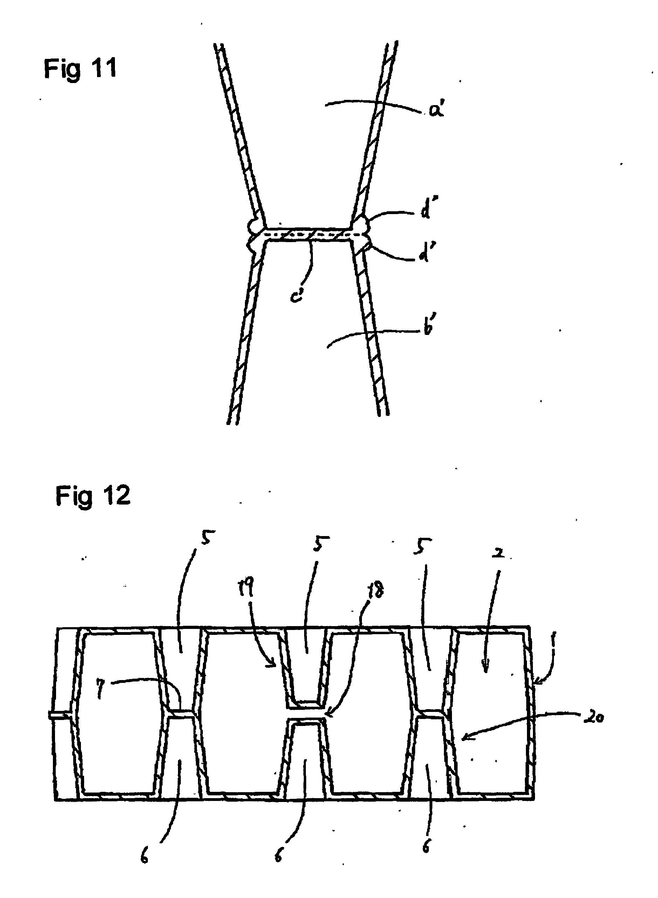

Furthermore, since the welded surface produced by forming recessed ribs from the front surface wall and the rear surface wall and welding the top end parts with each other in the blow molding process is formed by pressuring a parison in a molten state by a mold, the resin in the molten state is pushed out to the outer circumference of the bonding part so as to generate puddle as shown in FIG. 11. The marks a', b' denote a recessed rib, c' a bonding part, and d' a resin puddle swelling to the outside of the bonding part c'. Thereby, a notch part is formed or the thickness of the recessed rib becomes uneven so that the shock absorbing performance of the energy absorbing member is lowered, and thus a desired shock absorbing effect cannot be obtained.

### DISCLOSURE OF THE INVENTION

Accordingly, in order to solve the problems, an object of the present invention is to provide an energy absorbing member for a vehicle made of thermoplastics, capable of providing the excellent shock absorbing property, formed integrally by blow molding, having a hollow part, and a plurality of pairs of recessed ribs provided by denting a first wall and a second wall facing with each other, each toward the other side, and with the top end parts bonding with each other, wherein the recessed ribs are formed at a specific height and a specific interlocking rib is formed for integrally linking the a plurality of the recessed ribs, moreover, the pairs of the recessed ribs are formed by denting the first wall and second wall toward the other side with the top end parts thereof provided adjacently, and furthermore, a certain swelling part is formed preliminarily at the bonding part of the recessed ribs according to the parison pressuring operation.

According to the present invention there is provided a hollow energy-absorbing member for use in the passenger compartment of a vehicle, the member being formed by blow molding of thermoplastics and comprising first and second walls defining a hollow space, a plurality of first recessed frusto-conical ribs integrally moulded with the first wall and extending towards the second wall, each first recessed frusto-conical rib being fused at a welded surface with a second recessed frusto-conical rib integrally moulded with the second wall and extending therefrom wherein said first and second frusto-conical recessed ribs are symmetrically disposed about said welded surface, the average distance from the first wall to said welded surface is 15.0 to 45.0 mm and the average distance from the second wall to said welded surface is 15.0 to 45.0 mm, each of said fused pair of frusto-conical recessed ribs being configured to crush for absorbing an impact from inside the vehicle, and wherein the member further comprises an interlocking rib disposed on the first wall or the second wall, integrally coupled to at least two of adjacent first recessed frusto-conical ribs or adjacent second recessed frusto-conical ribs; characterised in that the interlocking rib has a depth b mm within a range of 3.0 ≤ b ≤ √(a/0.5) where a mm is the average distance between the first and second walls.

Another embodiment of the present invention provides the energy absorbing member for a vehicle wherein the recessed ribs are disposed on a plurality of virtual straight lines 'c', the lines 'c' being oriented at an angle of about approximately 30 to 60° from line 'd', the line 'd' being a line along a row of the fused pairs of recessed ribs, the interlocking ribs being formed along at least one line 'c'.

Still another embodiment of the present invention provides the energy absorbing member for a vehicle wherein the interlocking ribs are formed such that a total length of all the interlocking ribs is in a range of 10 to 60% with respect to a total length of all the lines 'c'.

Even another embodiment of the present invention provides the energy absorbing member for a vehicle wherein the interlocking ribs are a recessed groove having the depth of b(mm), and the width of 2.0 to 5.0(mm).

The energy absorbing member for a vehicle may further comprise a swelling part having the thickness of 0.5 to 6.0(mm) disposed in a part of the welded surface of the recessed rib end.

The swelling part may be formed in a hollow shape.

The swelling part may have a stepwise part projecting having the height of 0.5 to 1.5(mm) from the welded surface.

Even still another embodiment of the present invention provides the energy absorbing member for a vehicle further comprising at least one unfused pair of recessed ribs having an interval of 5.0 to 18.0(mm) on average disposed between said first and second recessed rib ends.

An even still further embodiment of the present invention provides the energy absorbing member for a vehicle wherein the fused pairs of recessed ribs comprise 50 to 80% of a total number of a sum of said fused and unfused pairs of recessed ribs.

A still yet another embodiment of the present invention provides the energy absorbing member for a vehicle wherein the first unfused recessed rib end has a surface chosen from the group of surfaces consisting of a concave surface and a convex surface and said second unfused recessed rib end has a surface of the group not chosen by said first recessed rib.

A still further embodiment of the present invention provides the energy absorbing member for a vehicle, wherein the recessed ribs having the fused recessed rib ends being integrally fused to the second wall at a welded surface further comprising a hollow swelling part having 0.5 to 6.0 mm thickness is formed in a part of the welded surface.

Still another embodiment of the present invention provides the energy absorbing member for a vehicle further comprising at least one unfused recessed rib comprising an unfused recessed rib end, and an interval of 5.0 to 18.0 mm on average disposed between the unfused recessed rib end and the second wall.

A still further embodiment of the present invention provides the energy absorbing member for a vehicle, wherein the fused recessed ribs comprise 50 to 80% of a total number comprising the sum of the fused and unfused recessed ribs.

### BRIEF DESCRIPTION OF THE DRAWINGS

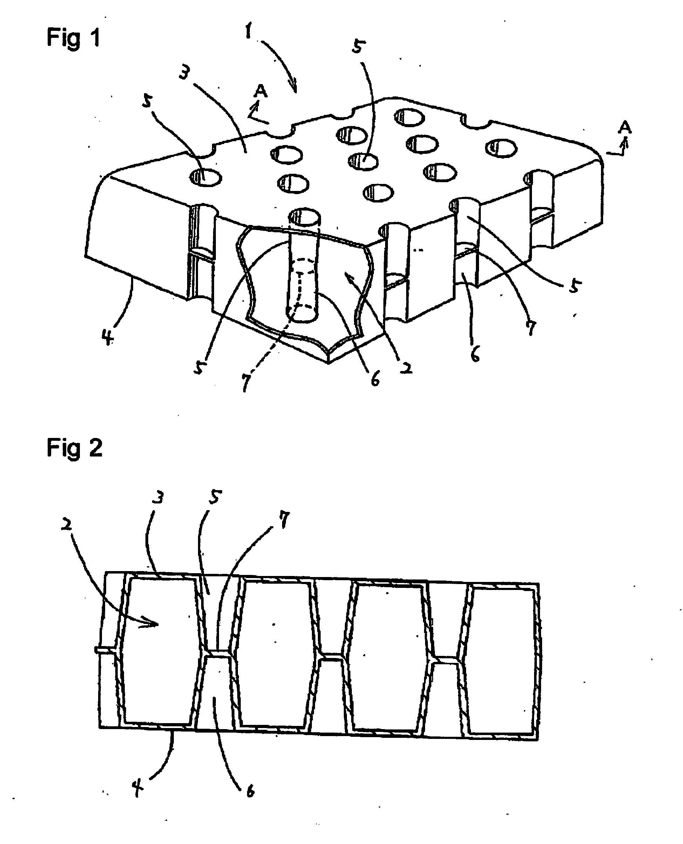

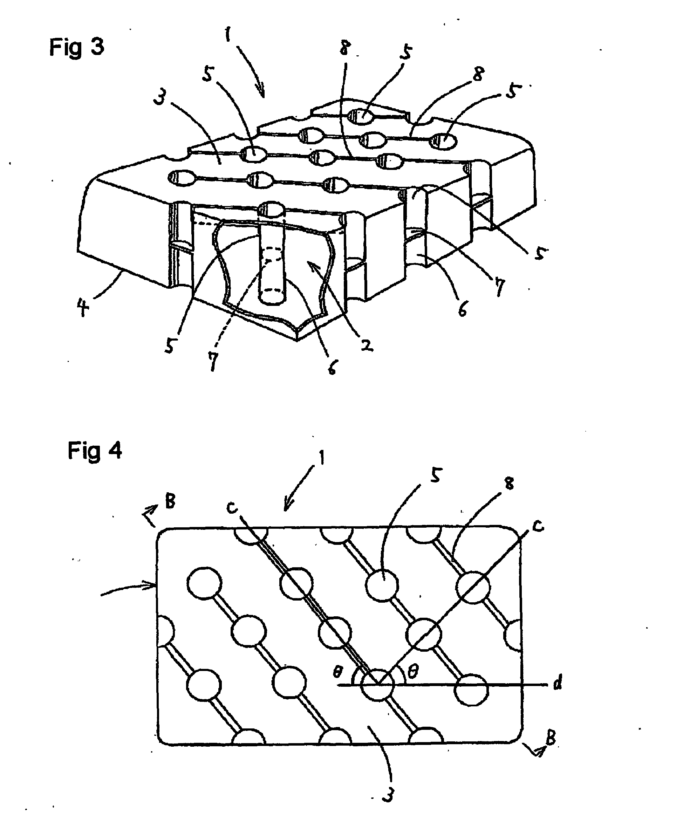

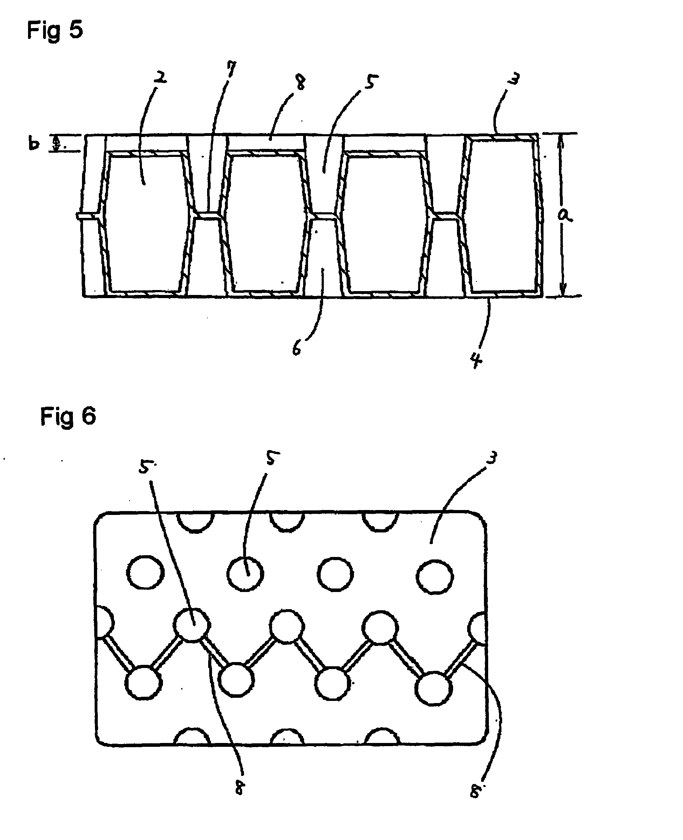

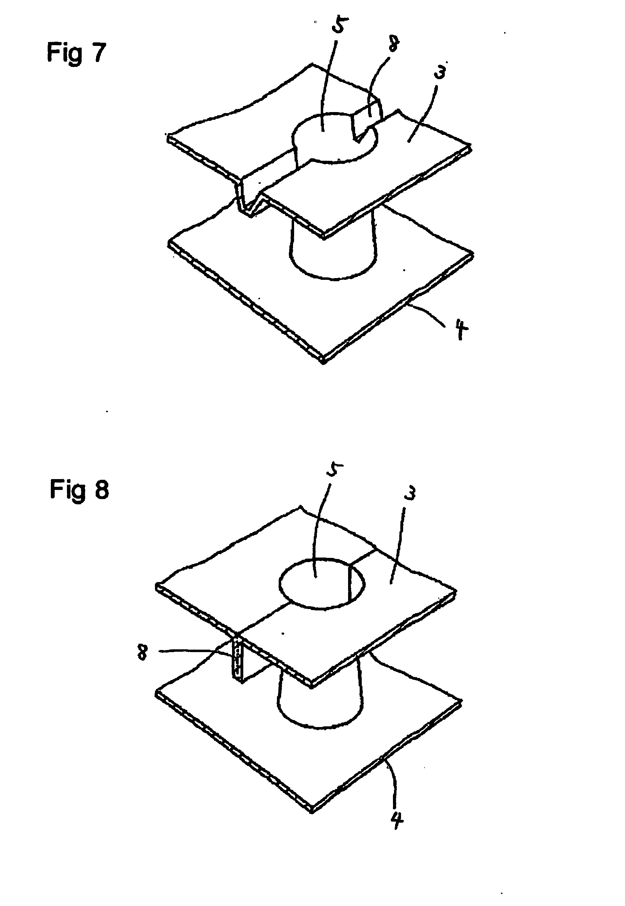

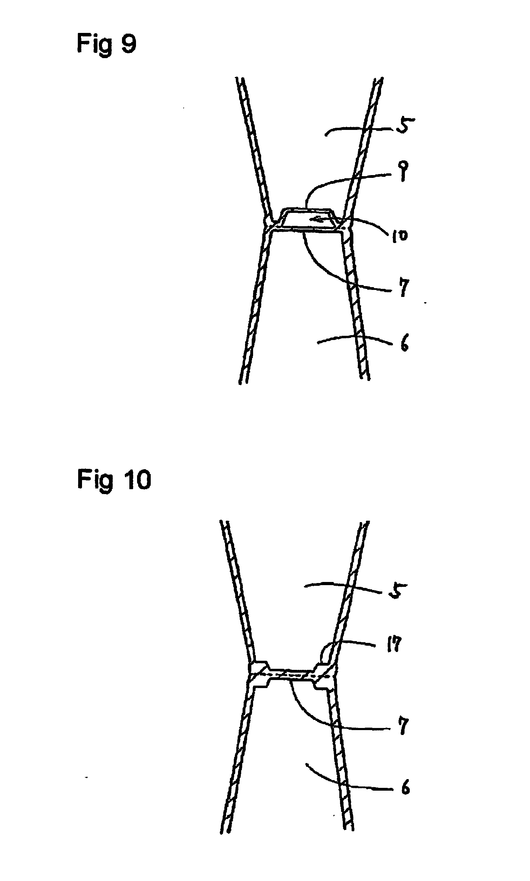

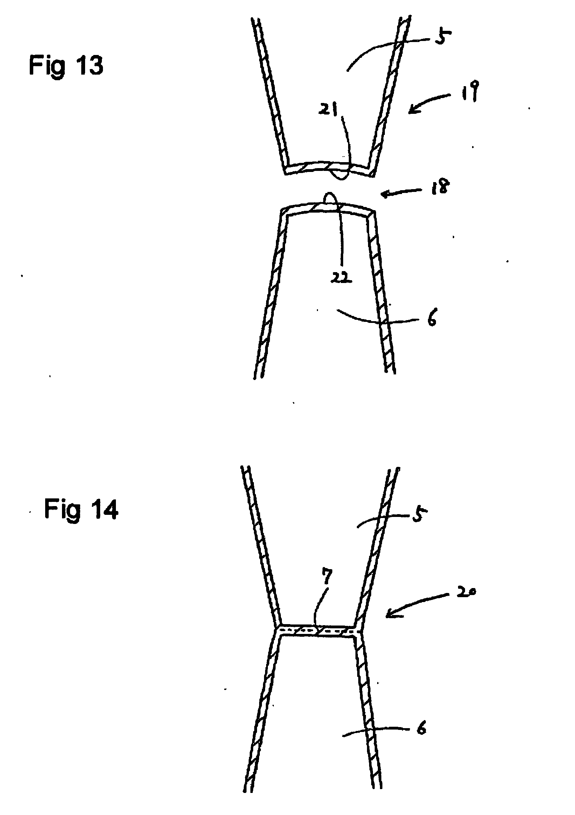

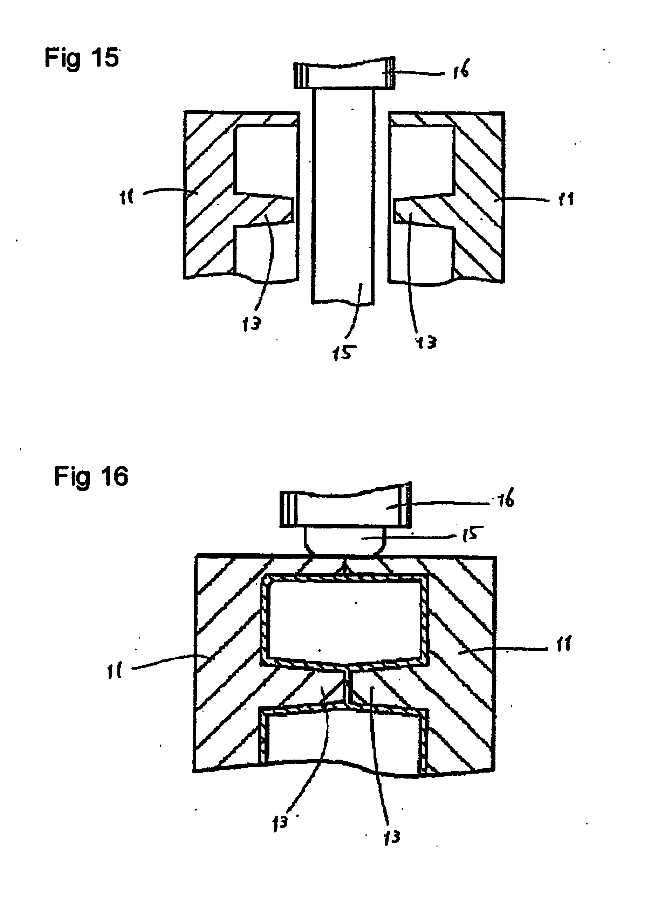

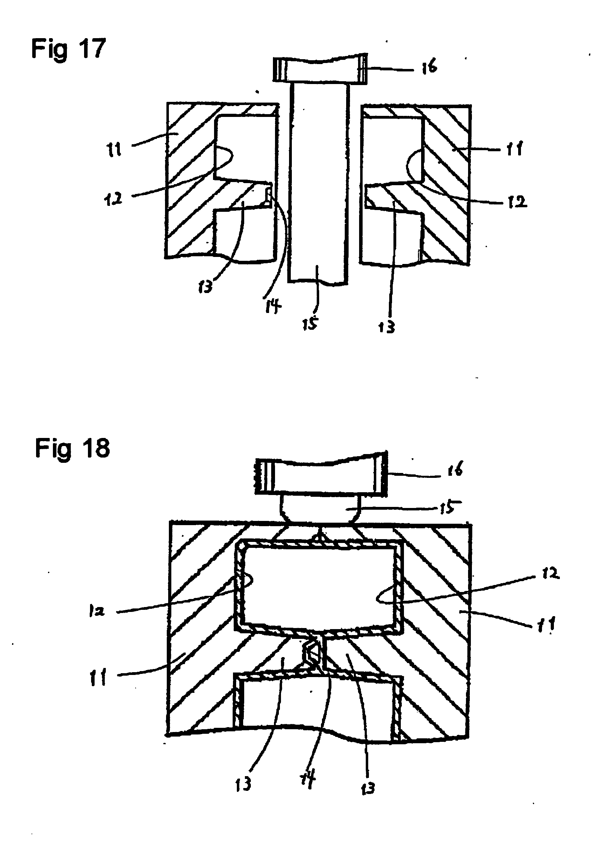

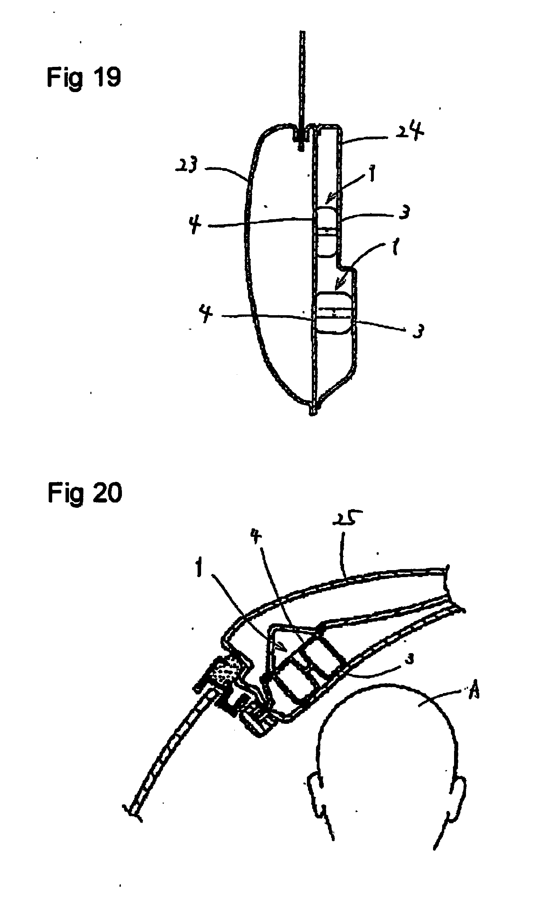

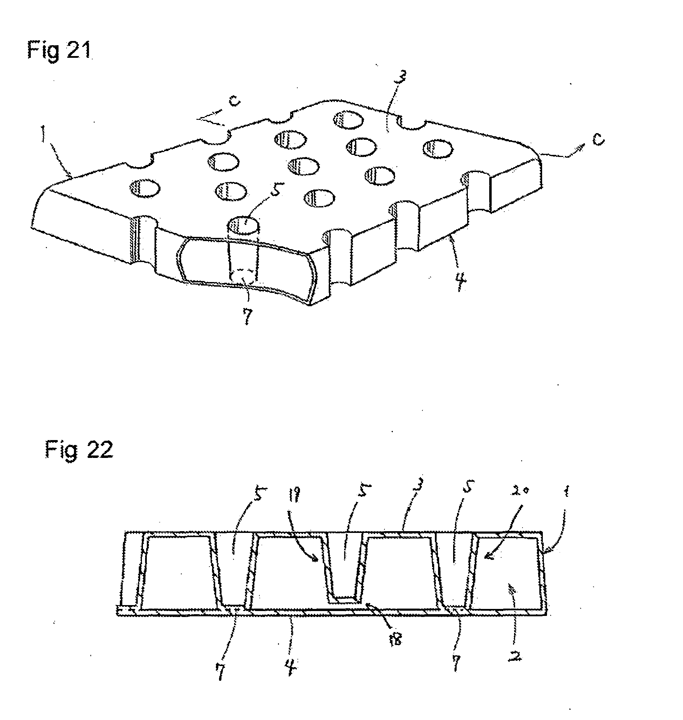

FIG. 1 is a partially broken perspective view showing an energy absorbing member for a vehicle according to the prior art; FIG. 2 is an enlarged cross-sectional view taken on the line A-A of FIG. 1; FIG. 3 is a partially broken perspective view showing an energy absorbing member for a vehicle according to an embodiment of the invention; FIG. 4 is a plan view of FIG. 3; FIG. 5 is an enlarged cross-sectional view taken on the line B-B of FIG. 4; FIG. 6 is a plan view showing another embodiment of the invention corresponding to FIG. 4; FIG. 7 is an enlarged cross-sectional view showing the essential part of the energy absorbing member for a vehicle according to the invention of FIG. 3; FIG. 8 is a view showing another embodiment of the invention corresponding to FIG. 7; FIG. 9 is an enlarged cross-sectional view showing the essential part of an energy absorbing member for a vehicle according to the invention; FIG. 10 is a view showing another embodiment of the invention corresponding to FIG. 9; FIG. 11 is a view showing a conventional embodiment corresponding to FIG. 9; FIG. 12 is a cross-sectional view showing an energy absorbing member for a vehicle according to still another embodiment of the invention; FIG. 13 is an enlarged view showing part of FIG. 12; FIG. 14 is an enlarged view showing part of FIG. 12; FIG. 15 is a view showing a first step for molding an energy absorbing member for a vehicle according to the invention by blow molding; FIG. 16 is a view showing a second step for molding an energy absorbing member for a vehicle according to the invention by blow molding; FIG. 17 is a view showing a first step for molding an energy absorbing member for a vehicle according to another embodiment of the
   invention by blow molding; FIG. 18 is a view showing a second step for molding an energy absorbing member for a vehicle according to another embodiment of the invention by blow molding; FIG. 19 is a cross-sectional view showing an embodiment with an energy absorbing member for a vehicle according to the invention provided inside a door trim of a vehicle; FIG. 20 is a cross-sectional view showing an embodiment with an energy absorbing member for a vehicle according to the invention provided inside a rear pillar of a vehicle; FIG. 21 is a view showing another embodiment of the invention; and FIG. 22 is an enlarged cross-sectional view taken on the line C-C of FIG. 21.

### BEST MODE FOR CARRYING OUT THE INVENTION

In FIGS. 1 and 2, the reference numeral 1 denotes an energy absorbing member for a vehicle. The energy absorbing member for a vehicle 1 comprised of a thermoplastic resin. It is molded integrally by blow molding, and comprises a hollow part 2, and a plurality of recessed ribs 5, 6 formed by denting both a first wall 3 and a second wall 4 facing with each other, with the top end parts of the first and the second recessed ribs 5, 6 contacted with each other so as to provide a welded surface 7.

The height from the first wall 3 to the welded surface 7 of the first recessed ribs 5 is formed to 15.0 to 45.0 mm, and the height from the second wall 4 to the welded surface 7 of the second recessed ribs 6 is formed to 15.0 to 45.0 mm. By forming the height of the first recessed ribs 5 and the second recessed ribs 6 in a range of 15.0 to 45.0 mm, the impact at the time of the collision can be absorbed sufficiently in the process of crushing the recessed ribs so that a preferable energy absorbing member for a vehicle can be produced. The average distance between the first wall 3 and the second wall 4 of the energy absorbing member for a vehicle 1 is 30.0 to 90.0 mm, and the average thickness is 2.0 to 5.0 mm.

In another embodiment of the invention shown in FIGS. 3 to 6, the energy absorbing member for a vehicle 1 comprises an interlocking rib 8 for integrally linking a plurality of adjacent recessed ribs 5.

As shown in FIG. 4, the interlocking rib 8 is formed on a virtual straight lines c. The virtual straight lines are positioned with the angle θ formed with respect to the horizontal line d in a range of 30 to 60°. The ratio of the adjacent recessed ribs 5 formed on the virtual straight line with the interlocking ribs 8 formed is 10% to 60%.

As shown in FIG. 5, the depth of interlocking ribs 8 is formed in a range of 3.0 ≤ b ≤ √(a/0.5) where "a" is the thickness (mm) of the energy absorbing member 1, and "b" is the depth (mm) of the interlocking ribs.

The interlocking ribs 8 are a recessed groove having the depth "b" of 3.0 to 15.0 mm, and the width of 2.0 to 5.0mm. In order to achieve the object of the invention, the interlocking ribs 8 need to have the depth "b" (mm) thereof in a range of 3.0 ≤ b ≤ √ (a/0.5) with respect to the thickness a of the main body. In particular, it is preferable that they are a recessed groove having the depth of 3.0 to 15.0 mm, and the width of 2.0 to 5.0 mm.

Furthermore, the interlocking ribs 8 are formed such that the total length of all the interlocking ribs is in a range of 10 to 60% with respect to the total length of all the segments virtual lines on both walls from edge to edge. In particular, it is preferable that they are formed only in one of the first wall 3 and the second wall 4, with the ratio of 25%.

Here, according to the energy absorbing member shown in FIG. 4, the interlocking ribs 8 are disposed only in the first wall 3, out of the 38 recessed ribs 5, 6 formed in the first wall 3 and the second wall 4 on the virtual straight line c, with the virtual straight line disposed in a range of 30 to 60° of the angle θ with respect to the horizontal line d so as to link the adjacent first recessed ribs 5 with each other only in one inclination direction for 50% of those on the virtual lines. That is, out of the 56 interlocking ribs formable by the calculation, 14 interlocking ribs are formed such that the interlocking ribs 8 are formed by a 25% ratio of the total of the first and second recessed ribs 5, 6 formed on the virtual straight lines. According to an energy absorbing member shown in FIG. 6, by the same calculation, the interlocking ribs are formed by a 14.3% ratio.

In the case where the depth b of the interlocking ribs 8 is less than 3 mm, the strength needed for constantly maintaining the posture of the recessed ribs 5 is insufficient so as to generate sideways toppling. Moreover, in the case the depth b of the interlocking ribs 8 is larger than the value of the square root of the two times of the thickness a of the energy absorbing member for a vehicle 1, the interlocking ribs 8 are contacted with the facing wall before providing full performance in the process of crushing the first and second recessed ribs 5, 6 at the time of collision so that the desired energy absorbing performance cannot be obtained.

The interlocking ribs 8 for linking a plurality of the recessed ribs 5 is open or closed such as illustrated in the embodiment shown in FIGS. 7 and 8. According to the embodiment illustrated in FIG. 8, the closed interlocking rib 8, so-called inner rib, is formed hidden inside the hollow part 2. The inner rib is produced by temporarily forming a groove-like rib from the first wall 3 toward the hollow part 2 direction at the time of blow molding, and integrating into a plate-like rib by the blow pressure. The desired energy absorbing performance can be obtained by accordingly providing the interlocking rib 8 as the inner rib.

A cross-sectional enlarged view of a pair of the recessed ribs is shown in FIGS. 9 to 11. On the welded surface 7 with the top end parts of the first recessed rib 5 and the second recessed rib 6 welded and integrated, a swelling part 9 is formed integrally, with a hollow part 10 formed in the swelling part 9.

The swelling part 9 formed on the welded surface 7 of the first and second recessed ribs 5, 6 may be formed as a stepwise fashion 17 with both end parts of the welded surface 7 projecting as shown in FIG. 10.

FIGS. 17 and 18 show a blow molding step for forming the swelling part 9. In FIGS. 17 and 18, the reference numerals 11, 11 denote a pair of split mold halves, 12, 12 denote cavities, and 13, 13 denote recessed rib forming parts. One of the recessed rib forming parts, 13, 13 has a swelling part forming member 14. The reference numeral 15 denotes a parison, and 16 an extrusion head.

As shown in FIG. 17, by disposing the parison 15 between the pair of the split mold halves 11, 11, closing the mold as shown in FIG. 18, and blowing a pressurized fluid into the parison 15 for blow molding, the pressed resin flows into the swelling part forming part 14 so as to form the swelling part 9 on the welded surface 7 to be formed by being pressed by the top end surfaces of the recessed rib forming parts 13, 13. Then, since the waste of the resin to the outer circumference of the welded surface 7 can be prevented according to the influx to the swelling part forming part 14 of the flowing resin pressed by the top end surfaces of the recessed rib forming parts 13, 13, the resin puddle is not generated on the outer circumference of the welded surface 7 so that the thickness irregularity is not generated in the welded surface 7 as well. By changing the position and the shape of the swelling part forming part 14 of the recessed rib forming parts 13, 13, the stepwise parts 17 shown in FIG. 10 can be formed.

Moreover, by forming the swelling part 9 projecting stepwise from the welded surface toward the first wall 3 or the second wall 4, with the height thereof in a range of 0.5 to 6.0 mm in the recessed rib 20 axis direction, generation of the resin puddle on the outer circumference of the bonding part can be prevented preferably. Furthermore, by forming the hollow part 10 in the swelling part 9, the thickness of the welded surface 7 can be formed evenly so that an energy absorbing member having the stable energy absorbing property can be formed.

As shown in FIGS. 12 to 14, the energy absorbing member for a vehicle 1 according to the invention comprises at least one pair of recessed ribs 20 having a welded surface 7 with the top end parts of the first recessed rib 5 and second side rib 6 welded and integrated, and at least one pair of recessed ribs 19 having an interval 18 of 5.0 to 18.0 mm on average with the top end parts of the first recessed rib and the second recessed rib adjacent with each other.

It is preferable that the recessed ribs 20 having the welded surface 7, the fused ribs, are about approximately 50 to 80% with respect to the total number of the recessed ribs. In such an embodiment, some ribs are configured such that the rib from the first wall is separated from its corresponding rib from the second wall by an interval. Such a configuration generally occurs in about approximately 50 to 20% of the ribs in a component.

Moreover, the facing interval of the top end parts of the recessed ribs 19 having the interval with the top end parts provided adjacently is preferably 5.0 to 18.0 mm on average.

According to the recessed ribs shown in FIGS. 12 and 13, one of the pair of the recessed ribs 19 having the interval 18 with the top end parts provided adjacently has the top end part formed as a concave surface part 21, and the other one has the top end part formed as a convex surface part 22, respectively. Then, by forming the top end parts accordingly, in the state with the recessed ribs 5, 6 deformed by receiving the impact so as to have the top end parts thereof contacted with each other, displacement with each other can be prevented so that the energy absorbing property of the energy absorbing member for a vehicle 1 can further be improved. The concave and convex surfaces of the recessed ribs 5, 6 may be provided in any mating fashion.

The energy absorbing member for a vehicle 1 according to the invention is blow molded as shown in FIGS. 15 and 16. The reference numerals 11, 11 are a pair of split mold halves. The split mold halves 11, 11 are provided with recessed rib forming parts 13, 13 for forming the recessed ribs 5, 6. The reference numeral 15 denotes a parison, and 16 an extrusion head.

As the thermoplastic resin for providing the energy absorbing member for a vehicle 1 according to the invention, a resin having large mechanical strength and high degree of rigidity can be used. Examples thereof include a polyolefin resin such as a high density polyethylene resin and a polypropylene resin, a styrene resin such as a polystyrene resin, an acrylonitrile-butadiene-styrene copolymer (ABS resin), an acrylonitrile-styrene resin (AS resin) and an acrylonitrile-acrylic rubber-styrene copolymer (AAS resin), a polyester resin such as a polyethylene terephthalate, a polycarbonate resin, a polyamide resin, a polyphenylene ether resin (PPO resin), and a blended composite thereof.

The energy absorbing member for a vehicle 1 according to the invention is provided inside a vehicle structural member such as a door of, a door trim, a body side panel, a roof panel, a pillar, or the like. FIG. 19 shows an embodiment of providing the energy absorbing member for a vehicle 1 according to the invention inside a door trim 24 of a door 23, FIG. 20 shows an embodiment of providing the same inside a rear pillar 25 of an automobile. In FIG. 20, the mark A denotes the head of a passenger.

Moreover, FIG. 21 illustrates an energy absorbing member for a vehicle 1 according to one embodiment of the present invention which comprises the recessed rib 5 provided by denting the first wall 3 toward the facing second wall 4. The welded surface 7 with the top end part of the recessed rib and the second wall welded such that the height of the recessed rib from the first wall 3 to the welded surface 7 is about approximately 15.0 to 45.0 mm.

FIG. 22 shows an enlarged cross-sectional view taken on the line C-C of FIG. 21, which illustrates an energy absorbing member 1 according to one embodiment of the present invention.

### INDUSTRIAL APPLICABILITY

As heretofore explained, the impact absorbing member for a vehicle according to the invention can be used preferably as a member for absorbing the impact of the collision, or the like by being disposed inside a vehicle structural member such as a door, a door trim, a body side panel, a roof panel, a pillar, a seat, and an instrument panel of an automobile, or the like.

## Claims

1. A hollow energy-absorbing member (1) for use in the passenger compartment of a vehicle, the member being formed by blow molding of thermoplastics and comprising first (3) and second walls (4) defining a hollow space (2), a plurality of first recessed frusto-conical ribs (5) integrally moulded with the first wall (3) and extending towards the second wall (4), each first recessed frusto-conical rib (5) being fused at a welded surface (7) with a second recessed frusto-conical rib (6) integrally moulded with the second wall (4) and extending therefrom, wherein said first (5) and second (6) frusto-conical recessed ribs are symmetrically disposed about said welded surface (7), the average distance from the first wall (3) to said welded surface (7) is 15.0 to 45.0 mm and the average distance from the second wall (4) to said welded surface (7) is 15.0 to 45.0 mm, each of said fused pair of frusto-conical recessed ribs (5, 6) being configured to crush for absorbing an impact from inside the vehicle, and wherein the member (1) further comprises an interlocking rib (8) disposed on the first wall (3) or the second wall (4), integrally coupled to at least two of adjacent first recessed frusto-conical ribs (5) or adjacent second recessed frusto-conical ribs (6);
**characterized in that** the interlocking rib (8) has a depth b mm within a range of 3.0 ≤ b ≤ √(a/0.5) where a mm is the average distance between the first (3) and second walls (4).

2. An energy-absorbing member according to Claim 1, wherein the recessed frusto-conical ribs (5, 6) are disposed on a plurality of virtual straight lines (c), said virtual straight line being oriented at an angle of about approximately 30° to 60° from the horizontal line being a line along a row of said fused pairs of recessed frusto-conical ribs (5, 6), said interlocking ribs being formed along at least one said virtual straight line (c).

3. An energy-absorbing member according to Claim 2, wherein said interlocking ribs (8) are formed such that the total length of all the interlocking ribs (8) is in a range of 10 to 60% with respect to the total length of all the virtual lines.

4. An energy-absorbing member according to Claim 1, 2 or 3,
wherein the interlocking ribs (8) are a recessed groove having a depth of b mm, and a width of 2.0 to 5.0 mm.

5. A vehicle having in the passenger compartment thereof a hollow energy-absorbing member according to any preceding claim, wherein said member is positioned to absorb an impact between the waist or breast of an occupant and a vehicle door trim.

6. A vehicle having in the passenger compartment thereof a hollow energy-absorbing member according to any of Claims 1 to 4, wherein said member is positioned to absorb an impact between the head of an occupant and a vehicle roof panel or roof support pillar.

## Patentansprüche

1. Hohles Stossdämpfungselement (1) zur Verwendung im Insassenraum eines Fahrzeugs, wobei das Element durch Blasformen eines Thermoplasten geformt ist und eine erste (3) und eine zweite Wand (4) umfasst, welche einen Hohlraum (2) begrenzen, eine Vielzahl erster ausgesparter kegelstumpfförmiger Rippen (5), die integral mit der ersten Wand (3) ausgebildet sind und sich in Richtung der zweiten Wand (4) erstrecken, wobei jede erste ausgesparte kegelstumpfförmige Rippe (5) an einer Schweißfläche (7) mit einer zweiten ausgesparten kegelstumpfförmigen Rippe (6) verschweißt ist, die integral mit der zweiten Wand (4) ausgebildet ist und sich von dieser erstreckt, wobei die ersten (5) und zweiten (6) kegelstumpfförmigen ausgesparten Rippen symmetrisch um die Schweißfläche (7) angeordnet sind, der durchschnittliche Abstand von der ersten Wand (3) zu der Schweißfläche (7) 15,0 bis 45,0 mm beträgt und der durchschnittliche Abstand von der zweiten Wand (4) zu der Schweißfläche (7) 15,0 bis 45,0 mm beträgt, jedes der verschweißten Paare kegelstumpfförmiger ausgesparter Rippen (5, 6) eindrückbar ist, um einem Stoß von innerhalb des Fahrzeugs aufzunehmen, und wobei das Element (1) weiterhin eine Verbindungsrippe (8) an der ersten Wand (3) oder der zweiten Wand (4) aufweist, die integral mit zumindest zwei benachbarten der ersten ausgesparten kegelstumpfförmigen Rippen (5) oder der zweiten ausgesparten kegelstumpfförmigen Rippen (6) gekoppelt ist;
**dadurch gekennzeichnet, dass** die Verbindungsrippe (8) eine Tiefe von b mm innerhalb eines Bereichs von 3,0 ≤ b ≤ √(a/0,5) aufweist, wobei a mm der Abstand zwischen der ersten (3) und zweiten Wand (4) ist.

2. Hohles Stossdämpfungselement (1) nach Anspruch 1, bei dem die ausgesparten kegelstumpfförmigen Rippen (5, 6) auf einer Vielzahl virtueller gerader Linien (c) angeordnet sind, wobei die virtuelle gerade Linie mit einem Winkel von etwa 30° bis 60° zu einer horizontalen Linie, die eine Linie entlang einer Reihe der verschweißten Paare kegelstumpfförmiger ausgesparter Rippen (5, 6) ist, angestellt ist, wobei die Verbindungsrippen entlang zumindest einer virtuellen geraden Linie (c) geformt sind.

3. Hohles Stossdämpfungselement (1) nach Anspruch 2, bei dem die Verbindungsrippen (8) so geformt sind, dass die gesamte Länge aller Verbindungsrippen (8) in einem Bereich von 10 bis 60% der gesamten Länge aller virtuellen Linien liegt.

4. Hohles Stossdämpfungselement (1) nach Anspruch 1, 2 oder 3, bei dem die Verbindungsrippen (8) eine ausgesparte Nut mit einer Tiefe von b mm und einer Breite von 2,0 bis 5,0 mm sind.

5. Fahrzeug, das in seinem Insassenraum ein hohles Stossdämpfungselement nach einem der vorgenannten Ansprüche aufweist, wobei das Element positioniert ist, um einen Stoß zwischen der Hüfte oder Brust eines Insassen und einer Fahrzeugtürverkleidung aufzunehmen.

6. Fahrzeug, das in seinem Insassenraum ein hohles Stossdämpfungselement nach einem der Ansprüche 1 bis 4 aufweist, wobei das Element positioniert ist, um einen Stoß zwischen dem Kopf eines Insassen und einer Dachverkleidung oder einem Dachstützholm aufzunehmen.

## Revendications

1. Elément d'absorption d'énergie creux (1) destiné à être utilisé dans le compartiment passager d'un véhicule, l'élément étant formé par moulage par soufflage de matière thermoplastique et comprenant des première (3) et seconde (4) parois définissant un espace creux (2), une pluralité de premières nervures tronconiques renfoncées (5) moulées d'un seul tenant avec la première paroi (3) et s'étendant en direction de la seconde paroi (4), chaque première nervure tronconique renfoncée (5) étant réunie par fusion au niveau d'une surface soudée (7) avec une seconde nervure tronconique renfoncée (6) moulée d'un seul tenant avec la seconde paroi (4) et s'étendant à partir de celle-ci, lesdites première (5) et seconde (6) nervures tronconiques renfoncées étant disposées de manière symétrique par rapport à ladite surface soudée (7), la distance moyenne de la première paroi (3) à ladite surface soudée (7) étant de 15,0 à 45,0 mm et la distance moyenne de la seconde paroi (4) à ladite surface soudée (7) étant de 15,0 à 45,0 mm, chacune de ladite paire de nervures tronconiques renfoncées (5, 6) réunies par fusion étant configurée pour s'écraser pour l'absorption d'un impact provenant de l'intérieur du véhicule, et l'élément (1) comprenant en outre une nervure de verrouillage réciproque (8) disposée sur la première paroi (3) ou la seconde paroi (4), couplée d'un seul tenant à au moins deux de premières nervures tronconiques renfoncées (5) adjacentes ou de secondes nervures tronconiques renfoncées (6) adjacentes; **caractérisé par le fait que** la nervure de verrouillage réciproque (8) a une profondeur de b mm comprise dans une plage de 3,0 ≤ b ≤ √(a/0,5), où a mm est la distance moyenne entre les première (3) et seconde (4) parois.

2. Elément d'absorption d'énergie selon la revendication 1, dans lequel les nervures tronconiques renfoncées (5, 6) sont disposées sur une pluralité de lignes droites virtuelles (c), ladite ligne droite virtuelle étant orientée à un angle d'environ approximativement 30° à 60° par rapport à la ligne horizontale correspondant à une ligne le long d'une rangée desdites paires de nervures tronconiques renfoncées (5, 6) réunies par fusion, lesdites nervures de verrouillage réciproque étant formées le long d'au moins une ligne droite virtuelle précitée (c).

3. Elément d'absorption d'énergie selon la revendication 2, dans lequel lesdites nervures de verrouillage réciproque (8) sont formées de telle sorte que la longueur totale de toutes les nervures de verrouillage réciproque (8) est comprise dans une plage de 10 à 60 % par rapport à la longueur totale de toutes les lignes virtuelles.

4. Elément d'absorption d'énergie selon l'une des revendications 1, 2 ou 3, dans lequel les nervures de verrouillage réciproque (8) sont une rainure renfoncée ayant une profondeur de b mm et une largeur a de 2,0 à 5,0 mm.

5. Véhicule ayant, dans son compartiment passager, un élément d'absorption d'énergie creux selon l'une quelconque des revendications précédentes, ledit élément étant positionné pour absorber un impact entre la taille ou la poitrine d'un passager et une garniture de portière de véhicule.

6. Véhicule ayant, dans son compartiment passager, un élément d'absorption d'énergie creux selon l'une quelconque des revendications 1 à 4, ledit élément étant positionné pour absorber un impact entre la tête d'un passager et un panneau de toit de véhicule ou un montant support de toit de véhicule.
